# EUROPÄISCHE PATENTSCHRIFT

(11) **EP 1 672 777 B1**
(45) Veröffentlichungstag und Bekanntmachung des Hinweises auf die Patenterteilung: **14.01.2009**
(21) Anmeldenummer: 05025840.9
(22) Anmeldetag: 26.11.2005
(51) Int. Cl.: H02P 6/06, H02P 6/10, H02P 6/14

(54) **Betätigungsvorrichtung für Kraftfahrzeugkomponenten**
Actuating device for vehicle parts
Dispositif de commande pour des composants de véhicules

(30) Priorität: 18.12.2004 DE 102004060996
(43) Veröffentlichungstag der Anmeldung: 21.06.2006
(73) Patentinhaber: LuK Lamellen und Kupplungsbau Beteiligungs KG, 77815 Bühl (DE)
(72) Erfinder: Buchet, Wai-Wai, 67000 Strassburg (FR); Zimmermann, Martin, 77880 Sasbach (DE)

(56) Entgegenhaltungen:
- EP-A- 1 182 117
- US-B1- 6 281 649

## Beschreibung

Die vorliegende Erfindung betrifft eine Betätigungsvorrichtung für Komponenten, insbesondere für Komponenten eines Kraftfahrzeugs. Es gehört zum Stand der Technik, diverse Kraftfahrzeugkomponenten mittels Elektromotoren zu betätigen bzw. zu steuern, wie beispielsweise im Rahmen elektronischer Ventilsteuerungssysteme (elektromechanischer Ventiltrieb, kurz EVT) oder von Schaltgetrieben. Der Begriff Schaltgetriebe fasst automatisierte Getriebe zusammen, die auf das Handschaltgetriebe (HSG) aufbauen und im Wesentlichen ähnliche Technologien nutzen. Dazu gehören das elektronische Kupplungsmanagement (EKM), das automatisierte Schaltgetriebe (ASG), das unterbrechungsfreie Schaltgetriebe (USG), das Parallelschaltgetriebe (PSG) und das elektrische Schaltgetriebe (ESG).

Üblicherweise weisen derartige Betätigungsvorrichtungen einen oder mehrere Elektromotoren zur Betätigung der betreffenden Komponenten auf. Für die meisten Anwendungen der Betätigungsvorrichtungen ist es von Bedeutung, dass die Elektromotoren zuverlässig und wartungsfrei betrieben werden können. Daher werden bevorzugt bürstenlose, d.h. elektronisch kommutierte Elektromotoren (Electronically Commuted, kurz EC-Motoren) eingesetzt. Bei diesen kann die verschleißanfällige Stromzuführung zum Rotor des Elektromotors über Schleifkontakte bzw. Bürsten entfallen, da für den Rotor ein oder mehrere Permanentmagneten eingesetzt werden. Die bei der Verwendung von Gleichspannung daher notwendige Umpolung der Spulen der Elektromagneten des Stators (kurz Statorspulen) erfolgt bei EC-Motoren automatisch gesteuert durch die über Hall-Sonden bestimmte Drehstellung des Rotors.

Gemäß dem Stand der Technik wird ein EC-Motor von einer beabstandet zu diesem angeordneten System-Steuerungseinrichtung angesteuert, in der üblicherweise auch die Leistungsendstufen zur Umpolung der Statorspulen angeordnet sind. Gegenstand einer Weiterentwicklung ist es, die Leistungsendstufen zusammen mit der Ansteuerungslogik, welche die Lagemesssignale der Hall-Sonden erfasst und daraus die Ansteuerungssignale für die Leistungsendstufe zur Umpolung ableitet, unmittelbar an bzw. in den EC-Motor zu verlagern.

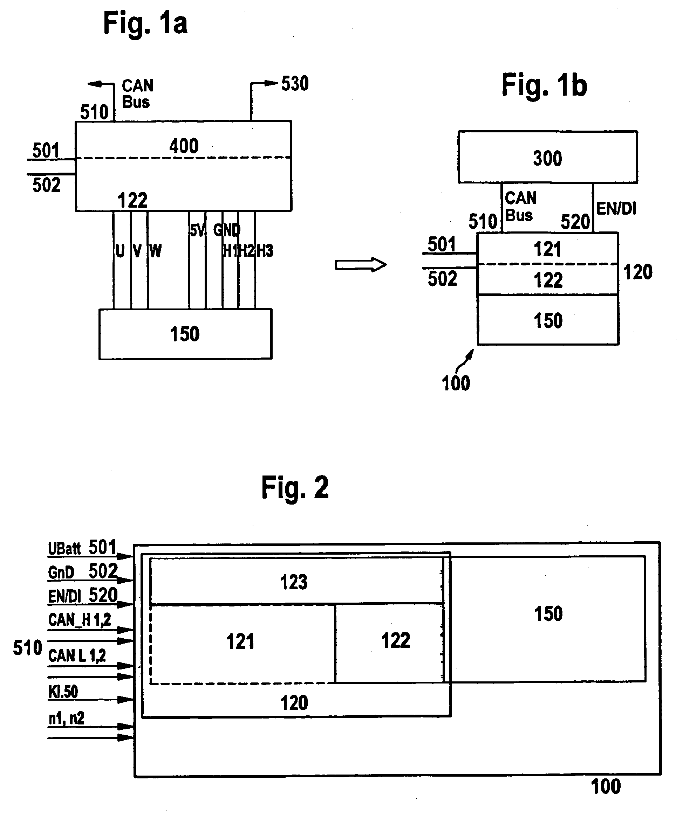

Dadurch können insofern Systemverbesserungen erzielt werden, als die Anzahl von elektrischen Verbindungen zwischen dem System-Steuerungseinrichtung und dem EC-Motor reduziert werden kann. Dies ist in vielfacher Hinsicht vorteilhaft, da es eine Reduzierung der Energieverluste in den elektrischen Verbindungen zur Leistungszuführung (vgl. Fig. 1, Verbindungen U, V und W) und geringere Störabstrahlungen in das Bordnetz und die Umgebung bewirkt, sowie Rückwirkungen auf die Lagemesssignale (vgl. Fig. 1, Verbindungen H1, H2 und H3) minimiert.

Ein weiterer Vorteil dieser Weiterentwicklung ist, dass eine übergeordnete Steuereinrichtung nicht mehr in unmittelbarer Motornähe, also z. B. getriebefest montiert werden muss. Ferner erlaubt eine unmittelbar am EC-Motor angeordnete Ansteuerungseinrichtung ein einheitliches EC-Motorenkonzept unanhängig davon, welche Art von Komponente, beispielsweise ein Getriebe oder eine Kupplung, durch den EC-Motor betätigt werden soll. Die Einheit von Ansteuerungseinrichtung und EC-Motor wird mitunter auch als Elektronikmotor bezeichnet.

Gemäß der üblichen Struktur einer Betätigungsvorrichtung (vgl. Fig. 2) weist diese neben dem EC-Motor mit drei integrierten Hall-Sonden eine motoreigene Ansteuerungseinrichtung auf, die mitunter auch als motorintegrierte Elektronik (MiE) bezeichnet wird. Die Ansteuerungseinrichtung gliedert sich ihrerseits in eine Logikeinrichtung, eine Leistungseinrichtung und eine Filtereinrichtung zur Absorption von Störabstrahlungen zur Erhöhung der Elektromagnetischen Verträglichkeit der Elektronik (auch EMV Puffer Filter genannt).

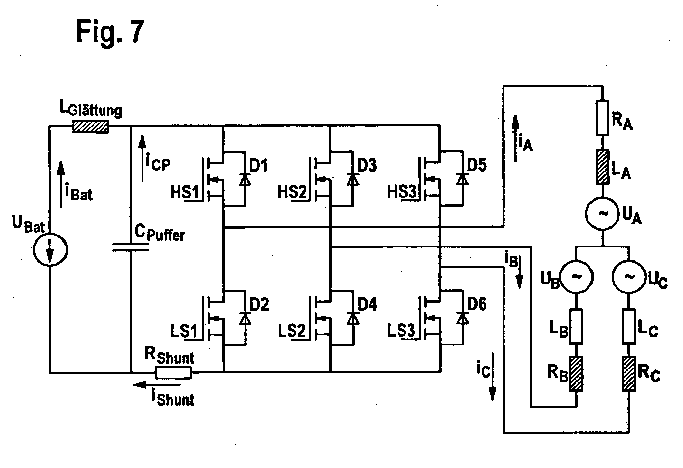

Die Logikeinrichtung weist wiederum Untereinheiten zur Signalerfassung, Signalverarbeitung, Signalspeicherung, Signalgenerierung sowie Treiber für die üblicherweise eingesetzten Feldeffekttransistoren der Endstufe (kurz Endstufen-FETs) in der Leistungseinrichtung (vgl. Fig. 7) auf.

Es lassen sich wenigstens zwei Systemvarianten beim Einsatz von Betätigungsvorrichtungen unterscheiden. Im ersten Fall (auch als Applikation 1 bezeichnet) ist die Betätigungsvorrichtung nicht Teil eines sicherheitskritischen Systems und kann daher autark betrieben werden. Ein Überwachungssystem für die Betätigungsvorrichtung ist in diesem Fall nicht erforderlich. Das Aktivieren bzw. Deaktivieren der Betätigungsvorrichtung kann dann direkt, z. B. über die Zündung erfolgen.

Gegebenenfalls kann durch die Ansteuerungseinrichtung eine Nachlauffunktion bewirkt werden, damit der EC-Motor nach dem Ausschalten der Zündung eine bestimmte Endposition anfährt bzw. bestimmte Parameter für den emeuten Start des EC-Motors abgespeichert werden können. Danach schaltet sich die Ansteuerungseinrichtung bevorzugt in einen Ruhezustand.

In einer zweiten typischen Anwendung von Betätigungsvorrichtungen (auch als Applikation 2 bezeichnet) sind diese Teil eines sicherheitskritischen Systems. Ihre Steuerung erfolgt daher zweckmäßigerweise durch eine übergeordnete Steuerungseinrichtung. Damit in der Ansteuerungseinrichtung auf einen eigenen Überwachungsrechner verzichtet werden kann, übernimmt die übergeordnete Steuerungseinrichtung ebenfalls die Überwachung des Motors. Die übergeordnete Steuerungseinrichtung kann - beispielsweise in einer Gefahrensituation oder bei einer Betriebsstörung der betätigten Fahrzeugkomponente oder der Betätigungsvorrichtung selbst - bewirken, dass die Betätigungsvorrichtung in einen sicheren Systemzustand überführt wird.

Bei einem sicheren Systemzustand lassen sich zwei Fälle unterscheiden: Im Fall a) muss der EC-Motor - beispielsweise beim Ausfall des Bordcomputers - schnellstmöglich zum Stillstand gebracht werden und danach in der aktuellen Position verharren. Im Fall b) wird ein Freilaufmodus des EC-Motors dadurch bewirkt, dass alle Endstufen-FETs abgeschaltet werden, d.h. diese gehen in einen hochohmigen Betriebszustand über und trennen die Statorspulen von der Spannungsversorgung.

Die US 6, 281, 641 B1 offenbart ein Betätigungssystem nach dem Stand der Technik für einen Scheibenwischer. Die EP 1 182 117 A2 zeigt ein Ausführungsbeispiel für mechantronische Aktoren für ein Kraftfahrzeug anhand einer Servolenkung.

Im Stand der Technik werden die Betätigungsvorrichtungen an die beiden dargestellten Anwendungsfälle angepasst, woraus sich ein erheblicher Anpassungsaufwand - u. a. z. B. aus der Entwicklung unterschiedlicher Ansteuerungseinrichtungen - ergibt.

Es ist daher die Aufgabe der vorliegenden Erfindung, eine Betätigungsvorrichtung der beschriebenen Art zur Verfügung zu stellen, die sich wenigstens für die beiden dargestellten Anwendungsfälle einsetzen lässt, wobei der Aufwand, die Betätigungsvorrichtung an den Anwendungsfall anzupassen, minimiert ist.

Diese Aufgabe wird erfindungsgemäß durch den Gegenstand von Anspruch 1 gelöst. Vorteilhafte Ausführungsformen und Weiterbildungen sind Gegenstand der Unteransprüche.

Es wird jedoch darauf hingewiesen, dass nicht notwendigerweise sämtliche Vorteile durch alle Weiterbildungen erreicht werden.

Die erfindungsgemäße Vorrichtung zum Betätigen von Komponenten eines Kraftfahrzeugs weist wenigstens einen Elektromotor auf, der seinerseits wenigstens eine Statoreinheit und wenigstens eine Rotoreinheit aufweist. Erfindungsgemäß ist wenigstens eine Ansteuerungseinrichtung für den Elektromotor vorgesehen, welche wenigstens eine Logikeinrichtung und wenigstens eine Leistungseinrichtung aufweist. Die Ansteuerungseinrichtung ist erfindungsgemäß fest mit der Statoreinheit verbunden. Ferner kann die erfindungsgemäße Betätigungsvorrichtung über wenigstens einen einzelnen Zustandssteuerungseingang von einem ersten Zustand in wenigstens einen zweiten Zustand überführt werden. Bevorzugt ist der Elektromotor elektronisch kommutierbar, d.h. ein EC-Motor. Vorzugsweise weist die Statoreinheit wenigstens drei Lagemesssensoren, bevorzugt Hall-Sensoren, zur Bestimmung von Lagemesssignalen auf, welche die relative Lage zwischen der Stator- und der Rotoreinheit charakterisieren.

Die erfindungsgemäße Betätigungsvorrichtung ist in vielfacher Hinsicht vorteilhaft. Einerseits entfällt die Notwendigkeit der Anpassung der Ansteuerungseinrichtung an den Anwendungsfall der Betätigungsvorrichtung. Zudem ist durch den einzelnen Zustandssteuerungseingang die Anzahl von Verbindungen zwischen den übergeordneten Steuereinrichtungen und den überwachten und gesteuerten Betätigungsvorrichtungen minimiert. Dies reduziert außerdem die Wahrscheinlichkeit von Betriebsstörungen der Betätigungsvorrichtung durch Kabelbrüche. Ferner kann eine durchtrennte Verbindung zum einzelnen Zustandssteuerungseingang zuverlässiger detektiert werden. Dadurch kann vermieden werden, dass die Betätigungsvorrichtung unnötigerweise in einen Sicherungszustand überführt wird.

Als Betätigungsvorrichtung wird im Rahmen dieser Erfindung eine Vorrichtung verstanden, welche in definierter Weise auf eine vorbestimmte Komponente eines Kraftfahrzeugs einwirkt. Bevorzugt handelt es sich um eine Vorrichtung, die in mechanischer Weise auf die entsprechende Komponente des Kraftfahrzeugs einwirkt, wie beispielsweise ein oder mehrere Elektromotoren, die in definierter Weise die Komponenten bedienen.

Als Ansteuerungseinrichtung für den Elektromotor wird - insbesondere, aber nicht ausschließlich - eine Einrichtung verstanden, welche im Wesentlichen die Ansteuerung des Elektromotors, das heißt die Regulierung der an den Elektromotor abgegebenen Leistung in Abhängigkeit der Drehstellung der Rotoreinheit gegenüber der Statoreinheit vornimmt.

Als feste Verbindung wird im Rahmen dieser Erfindung verstanden, dass die Ansteuereinrichtung - im Gegensatz etwa zu einer bloßen Kabelverbindung - in fester bzw. kraftschlüssiger Verbindung mit wenigstens der Statoreinheit des Elektromotors steht. Durch diese Anordnung kann eine Vielzahl von längeren elektrischen Verbindungen zwischen der Ansteuerungseinrichtung bzw. einem Teil der Ansteuerungseinrichtung und dem Elektromotor eingespart werden.

Als Zustandssteuerungseingang wird im Rahmen der Erfindung ein Abschnitt der Betätigungsvorrichtung verstanden, wobei die Beaufschlagung dieses Abschnitts mit vorbestimmten Werten einer physikalischen Größe die Überführung der Betätigungsvorrichtung in vorbestimmte Zustände bewirkt. Bevorzugt ist diese physikalische Größe der elektrische Strom oder die elektrische Spannung. Es sind jedoch auch Größen wie die Kraft oder der hydraulische Druck denkbar, welche den Zustandssteuerungseingang mechanisch, beispielsweise über einen Schalter steuern.

Als Zustand der Betätigungsvorrichtung wird im Rahmen der Erfindung deren Betriebszustand verstanden. Dieser lässt sich durch eine wenigstens einen der Betriebsparameter wie Leistungs- und Stromaufnahme des Elektromotors, Drehzahl des Elektromotors, Drehrichtung des Elektromotors, Drehposition des Elektromotors, Temperatur des Elektromotors, aber auch Eigenschaften der Ansteuerungseinrichtung wie Signalzustände in der Logikeinrichtung und dergleichen charakterisieren. Eine Änderung des Betriebszustands bedeutet, dass sich wenigstens eine der genannten Eigenschaften ändert.

In einer bevorzugten Weiterbildung der vorliegenden Erfindung ist wenigstens eine Entscheidereinrichtung vorgesehen, welche wenigstens mit dem Zustandssteuerungseingang verbunden ist. Die Entscheidereinrichtung bewirkt in Abhängigkeit wenigstens einer Eigenschaft der physikalischen Größe, mit welcher der Zustandssteuerungseingang beaufschlagt ist, d.h. abstrakt des dort anliegenden Signals (Zustandssteuerungssignal), die Überführung der Betätigungsvorrichtung vom ersten in den zweiten Zustand.

In einer weiteren bevorzugten Ausführungsform der Erfindung ist die Eigenschaft des Zustandssteuerungssignals, deren Änderung von der Entscheidereinrichtung erfasst wird und welche die Überführung der Betätigungsvorrichtung vom ersten in den zweiten Zustand bewirkt, einer Gruppe von Signaleigenschaften entnommen, welche den Signalpegel, die Signalfrequenz, periodische Signalmuster, singuläre Signalmuster, das Frequenzspektrum, die Signalanstiegs- und Abfallzeit, das Signaltastverhältnis und dergleichen enthält.

In einer weiteren bevorzugten Weiterbildung der vorliegenden Erfindung sieht die Entscheidereinrichtung wenigstens ein vorbestimmtes Entscheidungskriterium, bevorzugt mehrere vorbestimmte Entscheidungskriterien vor. Ein Entscheidungskriterium legt im Rahmen dieser Erfindung für vorbestimmte Fälle der Über- oder Unterschreitung vorbestimmter Schwellwerte der Eigenschaft des Zustandssteuerungssignals vorbestimmte, sich durch unterschiedliche Betriebsparameter der Betätigungsvorrichtung auszeichnende zweite Zustände fest, in welche die Betätigungsvorrichtung beim Eintritt eines dieser Fälle überführt wird.

D.h. die Entscheidungskriterien legen vorbestimmte Veränderungsmuster des Zustandssteuerungssignals fest, die von der Entscheidereinrichtung erkannt werden, wobei die Entscheidereinrichtung infolge der Veränderungsmustererkennung die Überführung der Betätigungsvorrichtung in einen zweiten Zustand bewirkt. Insbesondere ermöglichen die Entscheidungskriterien die Unterscheidung von Veränderungsmustern des Zustandssteuerungssignals und erlauben, dass die Betätigungsvorrichtung bei unterschiedlichen Veränderungsmustern in unterschiedliche zweite Zustände, welche sich durch unterschiedliche Betriebsparameter der Betätigungsvorrichtung auszeichnen, überführt wird. Bevorzugt weist die Entscheidereinrichtung wenigstens ein Logikgatter, vorzugsweise eine Kombination von Logikgattern auf.

In einer weiteren bevorzugten Ausführungsform weist die Logikeinrichtung wenigstens eine Signalerfassungseinrichtung, eine Speichereinrichtung, eine Recheneinrichtung und eine Treibereinrichtung auf. In einer weiteren bevorzugten Ausführungsform der vorliegenden Erfindung weist die Leistungseinrichtung wenigstens eine Wechselrichtereinrichtung mit Leistungsschalteinrichtungen auf, wobei als Leistungsschalteinrichtungen vorzugsweise Leistungsfeldeffekttransistoren vorgesehen sind.

In einer weiteren vorteilhaften Weiterbildung der vorliegenden Erfindung ist der erste Zustand der Betätigungsvorrichtung ein Aktionszustand und der zweite Zustand der Betätigungsvorrichtung ein Ruhezustand. Als Aktionszustand der Betätigungsvorrichtung wird verstanden, dass Leistung an den Elektromotor abgegeben wird, als Ruhezustand der Betätigungsvorrichtung hingegen, dass keine Leistung an den Elektromotor abgegeben wird.

In einer anderen bevorzugten Ausführungsform ist der erste Zustand der Betätigungsvorrichtung ein Aktionszustand und der zweite Zustand der Betätigungsvorrichtung ein Sicherungszustand. Als Sicherungszustand wird verstanden, dass der Elektromotor, bewirkt durch eine übergeordnete Steuerungseinrichtung, einen vorbestimmten, an die Anwendung der Betätigungsvorrichtung angepassten Betriebszustand einnimmt. Beim Übergang in den Sicherungszustand steuert die übergeordnete Steuerungseinrichtung die Betriebsparameter der Betätigungsvorrichtung in vorbestimmter Weise, d.h. die übergeordnete Steuerungseinrichtung bewirkt eine Sicherungszustandsübergangsfunktion, um das Risiko einer Beschädigung der betätigten Fahrzeugkomponente oder der Betätigungsvorrichtung selbst zu minimieren.

In einer weiteren bevorzugten Ausführungsform bewirkt die Ansteuerungseinrichtung beim Übergang in den Ruhezustand wenigstens einer Ruhezustandsübergangsfunktion. Als Ruhezustandsübergangsfunktion wird im Rahmen der Erfindung verstanden, dass die Ansteuerungseinrichtung die Betriebsparameter der Betätigungsvorrichtung in vorbestimmter Weise vor dem Abschalten der Leistungsabgabe an den Elektromotor steuert.

Vorzugsweise ist die Ruhezustandsübergangsfunktion einer Gruppe entnommen, welche das Anfahren einer vorbestimmten Endposition durch den Elektromotor, das Abspeichern wenigstens eines vorbestimmten Parameters in Abhängigkeit der Lagemesssignale oder der Lagemesssignale selbst in der Speichereinrichtung und dergleichen enthält.

In einer bevorzugten Ausführungsform der vorliegenden Erfindung geht die Ansteuerungseinrichtung nach dem Bewirken der Ruhezustandsübergangsfunktion selbst in einen Ansteuerungseinrichtungsruhezustand über. In einer anderen bevorzugten Ausführungsform wird die Betätigungsvorrichtung von einer übergeordneten Steuerungseinrichtung gesteuert und/oder überwacht. Bevorzugt steuert die übergeordnete Steuerungseinrichtung die Betätigungsvorrichtung wenigstens auch über den einzelnen Zustandssteuerungseingang.

In einer weiteren vorteilhaften Ausführungsform der vorliegenden Erfindung bewirkt die übergeordnete Steuerungseinrichtung beim Übergang der Betätigungsvorrichtung in den Sicherungszustand wenigstens eine Sicherungszustandsübergangsfunktion.

Bevorzugt ist die Sicherungszustandsübergangsfunktion einer Gruppe entnommen, welche das Bremsen des Elektromotors, bevorzugt innerhalb eines kurzen Zeitintervalls, den Freilauf des Elektromotors, das Abschalten der Leistungsschalteinrichtungen und dergleichen enthält.

In einer weiteren bevorzugten Ausführungsform schaltet die Ansteuerungseinrichtung während des Ausführens der Sicherungszustandsübergangsfunktion die Treibereinrichtung zeitlich verzögert ab. Bevorzugt ist diese Verzögerung einstellbar.

In einer bevorzugten Ausführungsform wird das Bremsen des Elektromotors dadurch bewirkt, dass die Leistungsschalteinrichtungen die Spulenstromkreise der Statoreinheit kurzschließen. In einer anderen bevorzugten Ausführungsform wird der Freilauf des Elektromotors dadurch bewirkt, dass die Leistungsschalteinrichtungen die Spulenstromkreise der Statoreinheit öffnen.

In einer weiteren bevorzugten Ausführungsform geht die Ansteuerungseinrichtung nach dem Bewirken der Sicherungszustandsübergangsfunktion durch die übergeordnete Steuerungseinrichtung in einen Ansteuerungseinrichtungsruhezustand über. Als Ansteuerungseinrichtungsruhezustand wird verstanden, dass wenigstens Teile der Ansteuerungseinrichtung stromlos sind.

In einer weiteren bevorzugten Ausführungsform ist die Rotoreinheit fest mit einer mechanischen Kraftübertragungseinrichtung verbunden. Bevorzugt wird eine erfindungsgemäße Betätigungsvorrichtung für Schaltgetriebe, Nockenwellverstellsysteme, elektronische Kupplungsmanagementsysteme und dergleichen verwendet.

Weitere Vorteile und Ausführungsformen der vorliegenden Erfindung ergeben sich aus den beiliegenden Figuren.

### Darin zeigen:

- Fig. 1a: ein Anwendungsbeispiel für eine Betätigungsvorrichtung nach dem Stand der Technik;
- Fig. 1b: ein Anwendungsbeispiel für eine Ausführungsform der erfindungsgemäßen Betätigungsvorrichtung;
- Fig. 2: die Struktur und die Schnittstellen gemäß einer Ausführungsform der erfindungsgemäßen Betätigungsvorrichtung;

- Fig. 3a: eine Ausführungsform der erfindungsgemäßen Betätigungsvorrichtung für eine autark betriebene Anwendung (Applikation 1);
- Fig. 3b: eine Ausführungsform einer erfindungsgemäßen Betätigungsvorrichtung für eine Anwendung mit übergeordneter Steuerungseinrichtung (Applikation 2);
- Fig. 4: eine Schnittstellenlegende der Ausführungsbeispiele gemäß Fig. 3a und 3b;
- Fig. 5: einen Symbolschaltplan für eine Ausführungsform einer erfindungsgemäßen Logikeinrichtung;
- Fig. 6: die Wahrheitstabelle der Treibereinrichtung aus Fig. 5; und
- Fig. 7: einen Prinzipschaltplan für eine Ausführungsform einer erfindungsgemäßen Leistungseinrichtung zur Ansteuerung durch die Logikeinrichtung gemäß Fig. 5.

Fig. 1a zeigt eine Betätigungsvorrichtung nach dem Stand der Technik. Diese weist, wie in Fig. 1a durch das untere Rechteck symbolisiert, einen EC-Motor 150 mit drei Hall-Sensoren als Lagemesssensoren auf. Als oberes großes Rechteck in Fig. 1a ist eine System-Steuerungseinrichtung 400 dargestellt, in der zusätzlich die Leistungsendstufen 122 für den EC-Motor 150 untergebracht sind.

Da in der in Fig. 1a dargestellten Anwendung einer Betätigungsvorrichtung nach dem Stand der Technik die System-Steuerungseinrichtung 400 räumlich beabstandet von dem EC-Motor 150 angeordnet ist, sind zwischen diesen beiden Einrichtungen zahlreiche elektrische Verbindungen vorgesehen, die in Fig. 1a als vertikale Linien angedeutet sind.

So symbolisieren beispielsweise die mit U, V und W bezeichneten elektrischen Verbindungen die Leistungsverbindungen zu den Statorspulen des EC-Motors 150. Rechts daneben sind mit "5V" und "GND" Spannungsversorgungsverbindungen für die Hall-Sensoren vorgesehen. Noch weiter rechts in Fig. 1a sind die elektrischen Verbindungen H1, H2 und H3 gezeigt, welche die Lagemesssignale vom EC-Motor 150 zu der System-Steuerungseinrichtung 400 übertragen.

Wie bereits dargestellt, bringt diese Struktur mit den mitunter längeren Verbindungsleitungen zwischen der System-Steuerungseinrichtung 400 und dem EC-Motor 150 zahlreiche Nachteile mit sich, wie beispielsweise die Energieverluste über den ohmschen Widerständen der Leistungsverbindungsleitungen U, V und W. Ferner werden beim Schalten der Spannungen auf diesen Leitungen Störsignale in das Bordnetz abgestrahlt, wodurch mitunter auch die Lagemesssignale H1, H2 und H3 gestört werden können.

Die weiteren Schnittstellen der System-Steuerungseinrichtung 400 sind über die an deren linken Rand angrenzenden horizontalen Linien 501 und 502 sowie an deren oberen Rand angeordneten Pfeile 510 und 530 symbolisiert. Dabei bezeichnen die Anschlüsse 501 und 502 die Versorgungsanschlüsse der System-Steuerungseinrichtung 400. Mit dem Bezugszeichen 510 ist, wie durch die dickere Pfeillinie symbolisiert, eine so genannte CAN-Bus-Leitung (Control Area Network) angedeutet, welche mehrere Steuerungs- und Signalleitungen aufweist. Der rechte obere Pfeil 530 symbolisiert die Schnittstelle der System-Steuerungseinrichtung 400 zur Zündung.

Ein Ausführungsbeispiel für eine erfindungsgemäße Weiterentwicklung der Betätigungsvorrichtung ist in Fig. 1b dargestellt. Dabei bezeichnet das Bezugszeichen 100 die durch das komplette untere Rechteck symbolisierte erfindungsgemäße Betätigungsvorrichtung. Diese gliedert sich in den durch das untere Rechteck angedeuteten EC-Motor 150, welcher ebenfalls über drei Hall-Sensoren als Lagemesseinrichtung verfügt, sowie in die durch das direkt darüber liegende Rechteck angedeutete Ansteuerungseinrichtung 120. Diese gliedert sich ihrerseits - durch die Unterteilung mittels der gestrichelten Linie symbolisiert - in eine Logikeinrichtung 121 und eine Leistungseinrichtung 122.

Die Darstellung in Fig. 1b bringt zum Ausdruck, dass die Ansteuerungseinrichtung 120 und der EC-Motor 150 unmittelbar räumlich zusammen angeordnet sind, bzw. genauer, dass die Ansteuerungseinrichtung 120 fest mit der Statoreinheit des EC-Motors 150 verbunden ist. Wie leicht ersichtlich, entfallen in dieser vorteilhaften Weiterbildung längere Leistungsverbindungsleitungen U, V und W zur Ansteuerung der Statorspulen sowie längere Leitungen zur Übertragung der Lagemesssignale, d.h. z. B. die Verbindungen H1, H2 und H3 aus Fig. 1a. Die Problematik der Energieverluste in den Verbindungsleitungen beziehungsweise der Störabstrahlungen können hierdurch weitestgehend vermieden werden. Ferner ist die erfindungsgemäße Betätigungsvorrichtung 100 weniger anfällig gegen Erschütterungen, welche nicht selten zu Kontaktverlusten an Kontaktierungsstellen bzw. an Steckverbindungen der Leistungs-, Mess- und Steuerleitungen oder gar Kabelbrüchen zwischen der System-Steuerungseinrichtung 400 und dem EC-Motor 150 führen können.

Als Schnittstellen der Ansteuerungseinrichtung 120 sind an ihrer linken Seite die Versorgungsanschlüsse 501 und 502 vorgesehen sowie an ihrer Oberseite der CAN-Bus 510 und der erfindungsgemäße Zustandssteuerungseingang 520. Letzterer verbindet die Ansteuerungseinrichtung 120 mit der durch das obere Rechteck symbolisierten, übergeordneten Steuerungseinrichtung 300.

Über den CAN-Bus 510 können Betriebsparameter, wie beispielsweise die aktuelle Drehzahl des Elektromotors 150 an die übergeordnete Steuerungseinrichtung 300 übertragen werden. Damit ist die übergeordnete Steuerungseinrichtung 300 in der hier dargestellten Anwendung der Betätigungsvorrichtung 100 in einem sicherheitskritischen System in der Lage, die Betätigungsvorrichtung 100 zentral zu überwachen.

Daneben kann die übergeordnete Steuerungseinrichtung 300 Daten auch von anderen Komponenten des Kraftfahrzeugs erfassen und durch eine vorgesehene Prozessor- bzw. Recheneinrichtung darüber entscheiden, ob ein sicherheitskritischer Zustand eingetreten ist. Ist dies der Fall, so kann die übergeordnete Steuerungseinrichtung 300 die Betätigungsvorrichtung 100 über den erfindungsgemäßen einzelnen Zustandssteuerungseingang 520 in einen sicheren Systemzustand überführen.

In Fig. 2 sind die Struktur einer erfindungsgemäßen Betätigungsvorrichtung 100 sowie deren Schnittstellen für zwei im nachfolgenden beschriebene Anwendungsfälle dargestellt. Das äußerste Rechteck 100 deutet dabei die übergeordnete Einheit der Betätigungsvorrichtung an. Das rechte innere Rechteck symbolisiert den EC-Motor 150 mit den Hall-Sensoren. Links daneben bezeichnet das Rechteck breiter Linienstärke die mit dem EC-Motor 150 fest verbundene Ansteuerungseinrichtung 120.

Die Ansteuerungseinrichtung 120 gliedert sich wiederum in das obere schmale Rechteck, welches eine Filtereinrichtung 123 für Störstrahlungen aus dem und/oder in das Bordnetz und seitens des benachbarten EC-Motors 150 darstellt. Dabei filtert die Filtereinrichtung 123 insbesondere Störungen aus den Spannungsversorgungsleitungen der Betätigungsvorrichtung 100 heraus.

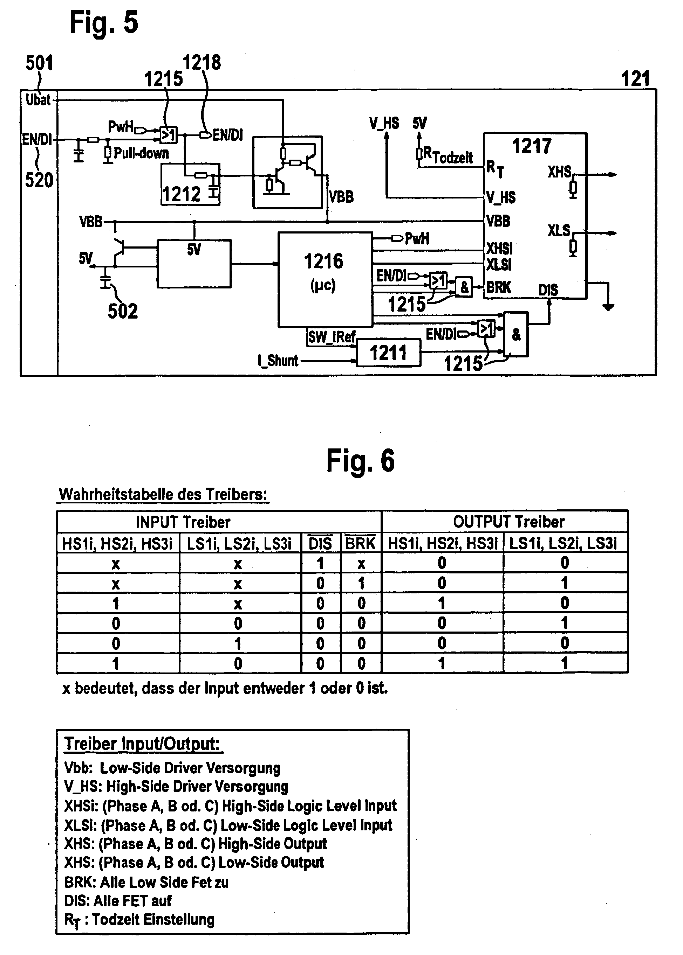

Das linke untere, teilweise gestrichelt umrandete Rechteck bezeichnet die Logikeinrichtung 121. Das rechte untere Rechteck innerhalb der Ansteuerungseinrichtung 120 kennzeichnet die Leistungseinrichtung 122, welche den EC-Motor 150 unmittelbar ansteuert. Die Logikeinrichtung 121 übernimmt dabei Funktionen der Signalerfassung, insbesondere der Lagemesssignale der Hall-Sensoren des EC-Motors 150. Ferner ist eine Recheneinrichtung (in Fig. 5 mit 1216 bezeichnet) innerhalb der Logikeinrichtung 121 vorgesehen, welche in der Lage ist, die Lagemesssignale und andere Steuersignale zu verarbeiten. Beispielsweise können auch Korrekturoperationen auf die Lagemesssignale angewendet werden.

Aus den Lagemesssignalen der Hall-Sensoren ermittelt die Logikeinrichtung 121 Ansteuerungssignale für eine Treibereinrichtung (in Fig. 5 mit 1217 bezeichnet) die noch Teil der Logikeinrichtung 121 ist. Die Treibereinrichtung steuert die Leistungseinrichtung 122 an. Die Leistungseinrichtung 122 nimmt daraufhin die Umpolung der Statorspulen des EC-Motors 150 vor, und zwar im jeweils geeigneten Moment in Abhängigkeit von der Drehposition der Rotoreinheit.

Die Leistungseinrichtung 122 verfügt dazu über einen aus Leistungs-FETs als Leistungsschalteinrichtungen aufgebauten Wechselrichter, wie er beispielsweise in Fig. 7 dargestellt ist. Ein Ausführungsbeispiel für eine erfindungsgemäße Logikeinrichtung 121 ist in Fig. 5 dargestellt.

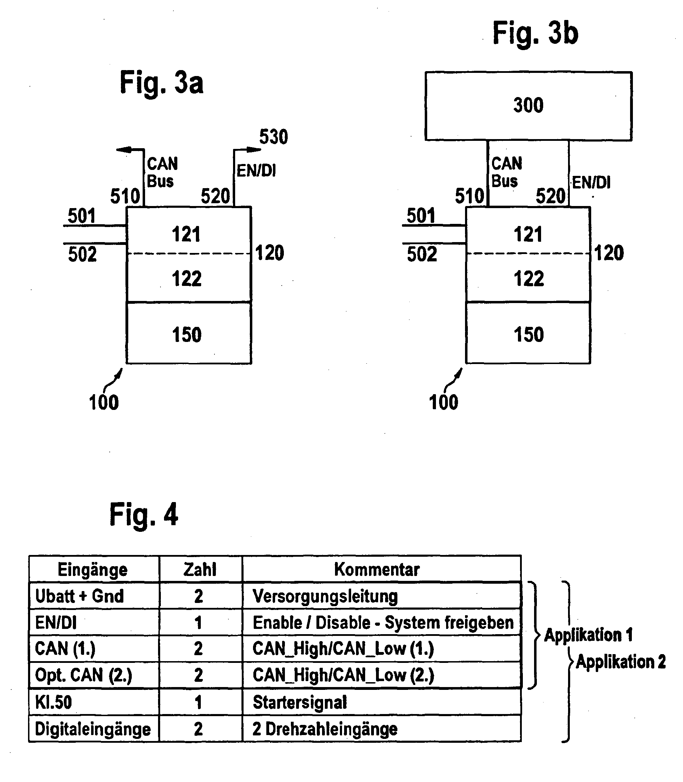

In den Figuren 3a und 3b ist dargestellt, dass die erfindungsgemäße Betätigungsvorrichtung 100 aufgabengemäß für die zwei Hauptanwendungsfälle von Betätigungsvorrichtungen eingesetzt werden kann. Dabei zeigt Fig. 3a eine Betätigungsvorrichtung 100, bestehend aus dem EC-Motor 150 und der mit ihm fest verbundenen Ansteuerungseinrichtung 120 in einem nicht sicherheitskritischen System. Das heißt, die Betätigungsvorrichtung 100 muss in diesem Falle nicht von einer übergeordneten Steuerungs- oder Überwachungseinrichtung überwacht oder gesteuert werden. Zwar können die Betriebsparameter der Betätigungsvorrichtung 100 über den CAN-Bus 510 abgefragt werden; der Zustandssteuerungseingang 520 ist jedoch direkt mit der Zündung 530 verbunden.

Im ersten Anwendungsfall der Betätigungsvorrichtung 100 kann durch die Ansteuerungseinrichtung 120 eine Nachlauffunktion implementiert werden, so dass der EC-Motor 150 nach dem Ausschalten der Zündung 530 eine bestimmte Endposition anfährt. Zusätzlich oder alternativ können - insbesondere für das Wiederaktivieren der Betätigungsvorrichtung 100 - deren aktuelle Betriebsparameter im Moment des Abschaltens noch abgespeichert werden. Nach dem Ausführen dieser Ruhezustandsübergangsfunktionen beziehungsweise Nachlauffunktionen schaltet sich die Ansteuerungseinrichtung 120 selbst in den Ansteuerungseinrichtungsruhezustand.

In Fig. 3b ist demgegenüber der zweite Anwendungsfall dargestellt, in welchem die erfindungsgemäße Betätigungsvorrichtung 100 innerhalb eines sicherheitskritischen Systems eingesetzt wird. Daher wird die Betätigungsvorrichtung 100 von der durch das obere Rechteck symbolisierten übergeordneten Steuerungseinrichtung 300 überwacht und gesteuert. Dabei können in der übergeordneten Steuerungseinrichtung 300 auch weitere Steuerungs- und Überwachungsfunktionen in Hard- und Software implementiert sein, welche nicht die betrachtete Betätigungsvorrichtung 100 betreffen.

Über den CAN-Bus 510 werden der übergeordneten Steuerungseinrichtung 300 aktuelle Betriebsparameter der Betätigungsvorrichtung 100 übermittelt. Die Steuerung der Betätigungsvorrichtung 100 erfolgt erfindungsgemäß, wie auch im in Fig. 3a dargestellten ersten Anwendungsfall, über den einzelnen Zustandssteuerungseingang 520.

Anders als in dem in Fig. 3a dargestellten Beispiel, in dem die in der Ansteuerungseinrichtung 120 implementierte Nachlauffunktion den Übergang der Betätigungsvorrichtung 100 in einen Ruhezustand bestimmt, muss in dem in Fig. 3b dargestellten zweiten Anwendungsfall für die Betätigungsvorrichtung 100 in einem sicherheitskritischen System die übergeordnete Steuerungseinrichtung 300 in der Lage sein, eine Überführung der Betätigungsvorrichtung 100 in einen Sicherungszustand zu bewirken.

Dabei kann sich - je nach Anwendung - der Sicherungszustand dadurch auszeichnen, dass der EC-Motor 150, beispielsweise bei einem Ausfall des Bordrechners, schnellstmöglich zum Stillstand gebracht wird und danach in der aktuellen Position verharrt. Es kann jedoch in einem anderen Fall gewünscht sein, dass der EC-Motor 150 in einen Freilaufmodus übergeht. Auch dies wird alleine über den einzelnen erfindungsgemäßen Zustandssteuerungseingang 520 der Betätigungsvorrichtung 100 bewirkt.

Hierbei stellt vorzugsweise eine Entscheidereinrichtung gemäß einer bevorzugten Weiterbildung der erfindungsgemäßen Betätigungsvorrichtung 100 sicher, dass -je nach Anwendungsfall - die Ansteuerungseinrichtung 120 direkt, beispielsweise über eine darin implementierte Ruhezustandsübergangsfunktion, den Übergang in den Ruhezustand bewirkt. Andernfalls wird die Ansteuerung durch eine übergeordnete Steuerungseinrichtung 300 in einem sicherheitskritischen System als solche erkannt und diese bewirkt über den einzelnen erfindungsgemäßen Zustandsteuerungseingangs 520 wie in Fig. 3b angedeutet die Überführung der Betätigungsvorrichtung 100 in einen Sicherungszustand. Vorzugsweise weist die Entscheidereinrichtung eine Kombination von Logikgattern auf.

Im ersten Anwendungsfall der Betätigungsvorrichtung 100, wie in Fig. 3a dargestellt, kann die Ansteuerungseinrichtung 120 autark arbeiten. Der Zustandsteuerungseingang 520 kann direkt mit der Zündung 530 verbunden werden, und die innerhalb der Ansteuerungseinrichtung 120 implementierte Ruhezustandsübergangsfunktion (Nachlauffunktion) bewirkt eine Aufrechterhaltung der Spannungsversorgung des EC-Motors 150 nach dem Abschalten der Zündung 530.

Die Wiederaktivierung des Systems erfolgt im ersten Anwendungsfall gemäß Fig. 3a über die Zündung beziehungsweise über ein Wiederaktivierungs- oder Wake-Up-Signal, das die Logikeinrichtung 121 beim Einschalten der Versorgung selbst generieren kann.

Ferner kann die Logikeinrichtung 121 im ersten Anwendungsfall gemäß Fig. 3a nach dem Ausschalten der Zündung über eine Selbsthaltefunktion bzw. ein Selbsthaltesignal sicherstellen, dass der Systemzustand beziehungsweise die Spannungsversorgung ihrer Treibereinrichtung aufrechterhalten wird. Hierdurch kann ein Nachlauf des EC-Motors 150 realisiert werden.

Fig. 3b zeigt ein Anwendungsbeispiel für eine Betätigungsvorrichtung 100 in einem sicherheitskritischen System. Darin kann die übergeordnete Steuereinrichtung 300 die Ansteuerungseinrichtung 120 in den stromlosen Ruhezustand versetzen und dadurch auch die Nachlaufzeit der Ansteuerungseinrichtung 120 nach dem Ausschalten der Zündung bestimmen. Die optionale Selbsthaltung der Ansteuerungseinrichtung 120 ist in diesem Fall inaktiv. Das heißt, die Ansteuerungseinrichtung 120 wird beim Abschalten über den Zustandssteuerungseingang 520 "EN/DI" automatisch in den sicheren Zustand versetzt, wie beispielsweise im Falle einer Systemrücksetzung.

Vorzugsweise ist die Logikeinrichtung 121 der Ansteuerungseinrichtung 120 so gestaltet, dass auch ein Kabelbruch beziehungsweise ein Durchtrennen der Verbindung zwischen der übergeordneten Steuerungseinrichtung 300 und dem Zustandssteuerungseingang 520 einen Übergang der Betätigungsvorrichtung in den Sicherungszustand auslöst. lm in Fig. 3b dargestellten sicherheitskritischen System ist es erforderlich, die Ansteuerungseinrichtung 120 für den Wiederbetrieb der Betätigungsvorrichtung 100 aktiv von außen freizugeben.

Fig. 4 zeigt eine Schnittstellenlegende für die in Fig. 3a und 3b dargestellten beiden Anwendungsfälle Applikation 1 und Applikation 2. Dabei kommt die in Fig. 3a dargestellte Applikation 1 der Betätigungsvorrichtung 100 in einem autark betriebenen System mit lediglich zwei Versorgungsleitungen "U_{Batt}" und "GnD", dem erfindungsgemäßen Zustandssteuerungseingang "EN/DI" und den zwei zweiadrigen CAN-Bus-Steuerleitungen "CAN (1.)" und "CAN (2.)" aus.

Für die Applikation 2 der Betätigungsvorrichtung 100 in einem sicherheitskritischen System mit einer übergeordneten Steuerungseinrichtung 300 sind zwei zusätzliche digitale Drehzahleingänge "n1", "n2" und eine Startersignalleitung "KI.50" implementiert.

In Fig. 5 ist ein Ausführungsbeispiel für eine erfindungsgemäße Logikeinrichtung 121 als symbolischer Schaltplan dargestellt. Diese weist als wesentliche Schnittstelle die links oben zugeführte Batteriespannung "U_{Batt}" zur Spannungsversorgung, gekennzeichnet durch die Versorgungsleitung 501 sowie die zugehörige Masse 502, auf. Unterhalb von "U_{Batt}" ist der erfindungsgemäße Zustandssteuerungseingang 520 - hier mit "EN/DI" bezeichnet - dargestellt.

Die Logikeinrichtung 121 nach Fig. 5 weist als Hauptbestandteile die im mittleren unteren Bereich als Quadrat symbolisierte Recheneinrichtung 1216 sowie die im rechten Bereich als Rechteck dargestellte Treibereinrichtung 1217 auf.

Der Zustandssteuerungseingang 520 ist über einen Kapazitäts-Entstörfilter mit dem Eingang des "Oder"-Gatters 1215 verbunden. Der zweite Eingang des "Oder"-Gatters 1215 wird von der Recheneinrichtung 1216 über das Signal "PwH" angesteuert. Dieses stellt im Falle einer Abschaltung der Betätigungsvorrichtung 100 über den Zustandssteuerungseingang 520 "EN/DI" sicher, dass das interne Zustandssteuerungssignal 1218 "En/Di" logisch "1" bleibt. Dadurch kann die Recheneinrichtung 1216 festlegen, wie lange der Systemzustand für den Nachlauf beziehungsweise für die Ruhezustandsübergangsfunktion aufrechterhalten wird.

Soll die Länge der Nachlaufzeit durch die Recheneinrichtung 1216 - genauer durch das Selbsthaltesignal "PwH" bestimmt werden, wird über die Verknüpfung des internen Zustandssteuerungssignals 1218 "En/Di" mittels der "Oder"- bzw. "Und"-Gatter an den "BRK"- und "DIS"-Eingängen der Treibereinrichtung 1217 sichergestellt, dass in diesen Fällen die Sicherungszustandsübergangsfunktionen der Treibereinrichtung 1217 nicht bewirkt werden.

Soll jedoch die übergeordnete Steuerungseinrichtung 300 den Übergang der Betätigungsvorrichtung 100 in einen Sicherungszustand bewirken, müssen Signale generiert werden, die Vorrang vor dem Selbsthaltesignal "PwH" haben. Dies kann -je nach Anwendungsfall - z. B. über das Signal "DIS" (für Disable) als Eingangssignal der Treibereinrichtung 1217 bewirkt werden, welches einen Freilauf des EC-Motors 150 auslösen kann.

Gemäß der in Fig. 6 dargestellten Wahrheitstabelle der Treibereinrichtung 1217 hat eine logische "0" am "DIS"-Eingang, beziehungsweise wie in der Wahrheitstabelle dargestellt, eine logische "1" des negierten "DIS"-Signals zur Folge, dass die in Fig. 7 dargestellten Endstufentreiber der High-Side (HS1, HS2, HS3), welche die Statorspulen mit der positiven Versorgungsspannung verbinden, sowie die Low-Side-FETs (LS1, LS2, LS3), welche die Statorspulen mit der Masse verbinden, abgeschaltet werden. Hierdurch werden die Statorspulen des EC-Motors 150 von der Versorgungsspannung hochohmig getrennt, wodurch ein Freilauf des Motors möglich wird.

Die andere bereits erwähnte Sicherungszustandsübergangsfunktion, nämlich der "Nothalt" der Betätigungsvorrichtung, wird im Ausführungsbeispiel nach Fig. 5 durch das "BRK" ("Brake", das heißt Bremssignal) bewirkt. Hat das negierte "BRK"-Signal den logischen Wert "1", wie in der Wahrheitstabelle in Fig. 6 dargestellt, hat dies zur Folge, dass die Low-Side-FETs LS1, LS2 und LS3 nach Fig. 7 eingeschaltet werden. Das heißt, die drei Statorspulen bzw. Statorphasen werden kurzgeschlossen. Infolgedessen wird die Rotoreinheit über die in den Statorspulen induzierten Gegenspannungen abgebremst.

Wird eine Betätigungsvorrichtung 100 mit einer wie in Fig. 5 dargestellten Logikeinrichtung 121 in einem sicherheitskritischen System verwendet, so kann die Recheneinrichtung 1216 deaktiviert bleiben, das heißt, das "PwH"-Signal ist dauerhaft "0", und das interne Zustandssteuerungssignal 1218 "En/Di" entspricht dem Signal am Zustandssteuerungseingang 520 "EN/DI".

Dennoch muss zur Ausführung der Sicherungszustandsübergangsfunktionen "Nothalt" beziehungsweise "Freilauf" sichergestellt werden, dass die Feldeffekttransistoren der Treibereinrichtung 1217 zur Ansteuerung der Leistungsendstufe für eine vorbestimmte Nachlaufzeit mit Spannung versorgt werden, da entweder die Ausgangstreiber im Falle des Freilaufs alle auszuschalten sind, beziehungsweise im Falle des Nothalts, die Low-Side-Treiber die Statorspulen mittels der Endstufen-FETs kurzschließen müssen.

Hierzu ist in Fig. 5 die Verzögerungsschaltung 1212 vorgesehen, welche die Versorgung der Low-Side-Treiber über die Spannung "VBB" so lange aufrechterhält, bis die Rotoreinheit durch Kurzschließen der Statorspulen durch die Low-Side-FETs mittels der Low-Side-Treiber ausreichend abgebremst wurde. Vorzugsweise ist dabei die Verzögerungszeit durch eine extern bestückbare Kapazität 1219 einstellbar.

Fig. 7 zeigt ein vereinfachtes Schaltbild der Endstufe mit den High-Side-FETs (HS1, HS2, HS3) und Low-Side-FETs (LS1, LS2, LS3), welche die Umpolung der Statorspulen vornehmen. Im Ausführungsbeispiel nach Fig. 7 sind drei Statorspulen A, B und C vorgesehen, die im vereinfachten Schaltbild durch ihre elektrischen Ersatzelemente, d.h. ihre Widerstände und ihre Induktivitäten R_{A}-L_{A}, R_{B}-L_{B} bzw. R_{c}-L_{c} symbolisiert sind.

Die drei Statorspulen A, B und C sind mit einem ihrer Spulenenden sternförmig zusammengeschaltet. Das jeweils andere Spulenende kann über eines der Endstufen-FET-Paare HS1-LS1, HS2-LS2 und HS3-LS3 entweder mit Masse über den jeweiligen Low-Side-FET oder über den jeweiligen High-Side-FET mit dem Batteriespannungspotential U_{Bat} verbunden werden. Dies legt die Richtung der Ströme i_{A}, i_{B}, i_{C} durch die Statorspulen und damit die Richtung der Magnetfelder der Statorspulen fest. Die Gates der Endstufen-FETs werden dabei durch die Treibereinrichtung angesteuert, wobei die Ansteuerungseinrichtung das Ein- und Ausschalten der jeweiligen Endstufen-FETs im geeigneten Moment in Abhängigkeit von der über die Hall-Sensoren bestimmten Drehstellung der Rotoreinheit vornimmt.

### Bezugszeichenliste

- 100: Betätigungsvorrichtung (Elektronikmotor)
- 120: Ansteuerungseinrichtung (Motorintegrierte Elektronik)
- 121: Logikeinrichtung
- 1211: Komparator
- 1212: Verzögerungsschaltung
- 1215: Logikgatter
- 1216: Recheneinrichtung (Mikrorechner)
- 1217: Treibereinrichtung
- 1218: Internes Zustandssteuerungssignal ("En/Di")
- 1219: Wählbare Kapazität
- 122: Leistungseinrichtung
- 123: Filtereinrichtung (EMV Puffer Filter)
- 150: EC-Motor (Electronically Commuted Motor)
- 300: übergeordnete Steuereinrichtung
- 400: System-Steuerungseinrichtung
- 501: Versorgungsspannung ("U_{batt}")
- 502: Masse ("GnD")
- 510: CAN-Bus
- 520: einzelner Zustandssteuerungseingang ("EN/DI")
- 530: Zündung

## Patentansprüche

1. Betätigungsvorrichtung (100) zum Betätigen von Komponenten eines Kraftfahrzeugs mit wenigstens einem Elektromotor (150), welcher wenigstens eine Statoreinheit und eine Rotoreinheit aufweist, wenigstens einer Ansteuerungseinrichtung (120) für den Elektromotor (150), welche wenigstens eine Logikeinrichtung (121) und wenigstens eine Leistungseinrichtung (122) aufweist, wobei die Ansteuerungseinrichtung (120) fest mit der Statoreinheit verbunden ist, und wobei die Betätigungsvorrichtung (100) wenigstens über einen einzelnen Zustandssteuerungseingang (520) von einem ersten Zustand in wenigstens einen zweiten Zustand überführt werden kann und die Betätigungsvorrichtung (100) von einer übergeordneten Steuerungseinrichtung (300) gesteuert und/oder überwacht wird **dadurch gekennzeichnet, dass** der erste Zustand der Betätigungsvorrichtung (100) ein Aktionszustand und der zweite Zustand der Betätigungsvorrichtung (100) ein Sicherungszustand ist und die übergeordnete Steuerungseinrichtung (300) beim Übergang der Betätigungsvorrichtung (100) in den Sicherungszustand wenigstens eine Sicherungszustandsübergangsfunktion bewirkt.

2. Betätigungsvorrichtung (100) nach Anspruch 1, **dadurch gekennzeichnet, dass** wenigstens eine Entscheidereinrichtung vorgesehen ist, welche wenigstens mit dem Zustandssteuerungseingang (520) verbunden ist und in Abhängigkeit wenigstens einer Eigenschaft der physikalischen Größe, mit welcher der Zustandssteuerungseingang beaufschlagt ist, d.h. abstrakt des dort anliegenden Signals (Zustandssteuerungssignal), die Überführung der Betätigungsvorrichtung (100) vom ersten in den zweiten Zustand bewirkt.

3. Betätigungsvorrichtung (100) nach wenigstens einem der vorangegangenen Ansprüche, **dadurch gekennzeichnet, dass** die Eigenschaft des Zustandssteuerungssignals, deren Änderung von der Entscheidereinrichtung erfasst wird und welche die Überführung der Betätigungsvorrichtung (100) vom ersten Zustand in den zweiten Zustand bewirkt, einer Gruppe von Signaleigenschaften entnommen ist, welche den Signalpegel, die Signalfrequenz, periodische Signalmuster, singuläre Signalmuster, das Signalfrequenzspektrum, die Signalanstiegs- und -abfallzeit, das Signaltastverhältnis und dergleichen enthält.

4. Betätigungsvorrichtung (100) nach wenigstens einem der vorangegangenen Ansprüche, **dadurch gekennzeichnet, dass** die Entscheidereinrichtung wenigstens ein vorbestimmtes Entscheidungskriterium, bevorzugt mehrere vorbestimmte Entscheidungskriterien vorsieht, welche für vorbestimmte Fälle der Über- oder Unterschreitung vorbestimmter Schwellwerte der Eigenschaft des Zustandssteuerungssignals vorbestimmte, sich durch unterschiedliche Betriebsparameter der Betätigungsvorrichtung auszeichnende zweite Zustände festlegt, in welche die Betätigungsvorrichtung beim Eintritt eines dieser Fälle überführt wird.

5. Betätigungsvorrichtung (100) nach wenigstens einem der vorangegangenen Ansprüche, **dadurch gekennzeichnet, dass** die Entscheidereinrichtung wenigstens ein Logikgatter (1215), bevorzugt eine Kombination von Logikgattern aufweist.

6. Betätigungsvorrichtung (100) nach wenigstens einem der vorangegangenen Ansprüche, **dadurch gekennzeichnet, dass** der Elektromotor (150) elektronisch kommutierbar ist.

7. Betätigungsvorrichtung (100) nach wenigstens einem der vorangegangenen Ansprüche, **dadurch gekennzeichnet, dass** die Statoreinheit wenigstens drei Lagemesssensoren, bevorzugt Hall-Sensoren, zur Bestimmung von Lagemesssignalen aufweist, welche die relative Lage zwischen der Statoreinheit und der Rotoreinheit charakterisieren.

8. Betätigungsvorrichtung (100) nach wenigstens einem der vorangegangenen Ansprüche, **dadurch gekennzeichnet, dass** die Ansteuerungseinrichtung (120) ferner wenigstens eine Filtereinrichtung (123) zur Absorption von Störabstrahlung aufweist.

9. Betätigungsvorrichtung (100) nach wenigstens einem der vorangegangenen Ansprüche, **dadurch gekennzeichnet, dass** die Logikeinrichtung (121) wenigstens eine Signalerfassungseinrichtung, eine Speichereinrichtung, eine Recheneinrichtung (1216) und eine Treibereinrichtung (1217) aufweist.

10. Betätigungsvorrichtung (100) nach wenigstens einem der vorangegangenen Ansprüche, **dadurch gekennzeichnet, dass** die Leistungseinrichtung (122) wenigstens eine Wechselrichtereinrichtung mit Leistungsschalteinrichtungen aufweist, wobei als Leistungsschalteinrichtungen vorzugsweise Leistungsfeldeffekttransistoren vorgesehen sind.

11. Betätigungsvorrichtung (100) nach wenigstens einem der vorangegangenen Ansprüche, **dadurch gekennzeichnet, dass** der erste Zustand der Betätigungsvorrichtung (100) ein Aktionszustand und der zweite Zustand der Betätigungsvorrichtung (100) ein Ruhezustand ist.

12. Betätigungsvorrichtung (100) nach wenigstens einem der vorangegangenen Ansprüche, **dadurch gekennzeichnet, dass** die Ansteuerungseinrichtung (120) beim Übergang in den Ruhezustand wenigstens eine Ruhezustandsübergangsfunktion bewirkt.

13. Betätigungsvorrichtung (100) nach wenigstens einem der vorangegangenen Ansprüche, **dadurch gekennzeichnet, dass** die Ruhezustandsübergangsfunktion einer Gruppe entnommen ist, welche das Anfahren einer vorbestimmten Endposition durch den Elektromotor (150), das Abspeichern wenigstens eines vorbestimmten Parameters in Abhängigkeit der Lagemesssignale oder der Lagemesssignale selbst in der Speichereinrichtung und dergleichen enthält.

14. Betätigungsvorrichtung (100) nach wenigstens einem der vorangegangenen Ansprüche, **dadurch gekennzeichnet, dass** die Ansteuerungseinrichtung (120) nach dem Bewirken der Ruhezustandsübergangsfunktion selbst in einen Ansteuerungseinrichtungsruhezustand übergeht.

15. Betätigungsvorrichtung (100) nach wenigstens einem der vorangegangenen Ansprüche, **dadurch gekennzeichnet, dass** die übergeordnete Steuerungseinrichtung (300) die Betätigungsvorrichtung (100) wenigstens auch über den einzelnen Zustandssteuerungseingang (520) steuert.

16. Betätigungsvorrichtung (100) nach wenigstens einem der vorangegangenen Ansprüche, **dadurch gekennzeichnet, dass** die Sicherungszustandsübergangsfunktion einer Gruppe entnommen ist, welche das Bremsen des Elektromotors (150), bevorzugt innerhalb eines kurzes Zeitintervalls, den Freilauf des Elektromotors (150), das Abschalten der Leistungsschalteinrichtungen und dergleichen enthält.

17. Betätigungsvorrichtung (100) nach wenigstens einem der vorangegangenen Ansprüche, **dadurch gekennzeichnet, dass** Ansteuerungseinrichtung (120) während des Ausführens der Sicherungszustandsübergangsfunktion die Treibereinrichtung (1217) zeitlich verzögert abschaltet, wobei die Verzögerung bevorzugt einstellbar ist.

18. Betätigungsvorrichtung (100) nach wenigstens einem der vorangegangenen Ansprüche, **dadurch gekennzeichnet, dass** das Bremsen des Elektromotors (150) **dadurch** bewirkt wird, dass die Leistungsschalteinrichtungen die Spulenstromkreise der Statoreinheit kurzschließen.

19. Betätigungsvorrichtung (100) nach wenigstens einem der vorangegangenen Ansprüche, **dadurch gekennzeichnet, dass** der Freilauf des Elektromotors (150) dadurch bewirkt wird, dass die Leistungsschalteinrichtungen die Spulenstromkreise der Statoreinheit öffnen.

20. Betätigungsvorrichtung (100) nach wenigstens einem der vorangegangenen Ansprüche, **dadurch gekennzeichnet, dass** die Ansteuerungseinrichtung (120) nach dem Bewirken der Sicherungszustandsübergangsfunktion durch die übergeordnete Steuerungseinrichtung (300) in einen Ansteuerungseinrichtungsruhezustand übergeht.

21. Betätigungsvorrichtung (100) nach wenigstens einem der vorangegangenen Ansprüche, **dadurch gekennzeichnet, dass** die Rotoreinheit fest mit einer mechanischen Kraftübertragungseinrichtung verbunden ist.

22. Verwendung einer Betätigungsvorrichtung (100) nach den Ansprüchen 1 bis 21 zum Betätigen einer Komponente, welche aus einer Gruppe von Komponenten ausgewählt ist, die Schaltgetriebe, Nockenwellenverstellsysteme, elektronische Kupplungsmanagementsysteme und dergleichen enthält.

## Claims

1. Operating apparatus (100) for operating components of a motor vehicle, having at least one electric motor (150) which has at least a stator unit and a rotor unit, at least one actuating device (120) for the electric motor (150), which actuating device has at least one logic device (121) and at least one power device (122), the actuating device (120) being fixedly connected to the stator unit, and it being possible to change over the operating apparatus (100) from a first state to at least a second state at least via a single state control input (520), and the operating apparatus (100) being controlled and/or monitored by a superordinate control device (300), **characterized in that** the first state of the operating apparatus (100) is an action state and the second state of the operating apparatus (100) is a safety state, and the superordinate control device (300) effects at least one safety state transfer function during the transfer of the operating apparatus (100) to the safety state.

2. Operating apparatus (100) according to Claim 1, **characterized in that** at least one decision-making device is provided which is connected at least to the state control input (520) and effects the changeover of the operating apparatus (100) from the first state to the second state as a function of at least one property of the physical variable which acts on the state control input, that is to say abstract of the signal (state control signal) applied to it.

3. Operating apparatus (100) according to at least one of the preceding claims, **characterized in that** the property of the state control signal, the change in which is detected by the decision-making device and which effects the changeover of the operating apparatus (100) from the first state to the second state, is taken from a group of signal properties which comprises the signal level, the signal frequency, periodic signal patterns, singular signal patterns, the signal frequency spectrum, the signal rise and fall time, the signal duty cycle and the like.

4. Operating apparatus (100) according to at least one of the preceding claims, **characterized in that** the decision-making device provides at least one predetermined decision-making criterion, preferably a plurality of predetermined decision-making criteria, which, for predetermined instances of predetermined threshold values of the property of the state control signal being exceeded or undershot, defines predetermined second states which are distinguished by different operating parameters of the operating apparatus and to which the operating apparatus is changed over when one of these instances occurs.

5. Operating apparatus (100) according to at least one of the preceding claims, **characterized in that** the decision-making device has at least one logic gate (1215), preferably a combination of logic gates.

6. Operating apparatus (100) according to at least one of the preceding claims, **characterized in that** the electric motor (150) can be electronically commutated.

7. Operating apparatus (100) according to at least one of the preceding claims, **characterized in that** the stator unit has at least three position measurement sensors, preferably Hall sensors, for determining position measurement signals which characterize the relative position between the stator unit and the rotor unit.

8. Operating apparatus (100) according to at least one of the preceding claims, **characterized in that** the actuating device (120) also has at least one filter device (123) for absorbing emitted noise.

9. Operating apparatus (100) according to at least one of the preceding claims, **characterized in that** the logic device (121) has at least a signal detection device, a memory device, a computation device (1216) and a driver device (1217).

10. Operating apparatus (100) according to at least one of the preceding claims, **characterized in that** the power device (122) has at least one inverter device with power switching devices, power field-effect transistors preferably being provided as power switching devices.

11. Operating apparatus (100) according to at least one of the preceding claims, **characterized in that** the first state of the operating apparatus (100) is an action state and the second state of the operating apparatus (100) is an inoperative state.

12. Operating apparatus (100) according to at least one of the preceding claims, **characterized in that** the actuating device (120) effects at least one inoperative state transfer function during the transfer to the inoperative state.

13. Operating apparatus (100) according to at least one of the preceding claims, **characterized in that** the inoperative state transfer function is taken from a group which comprises run-up to a predetermined end position by the electric motor (150), the storage of at least one predetermined parameter as a function of the position measurement signals, or of the position measurement signals themselves, in the memory device, and the like.

14. Operating apparatus (100) according to at least one of the preceding claims, **characterized in that** the actuating device (120) itself changes over to an actuating device inoperative state after the inoperative state transfer function is effected.

15. Operating apparatus (100) according to at least one of the preceding claims, **characterized in that** the superordinate control device (300) controls the operating apparatus (100) at least also via the single state control input (520).

16. Operating apparatus (100) according to at least one of the preceding claims, **characterized in that** the safety state transfer function is taken from a group which comprises the braking of the electric motor (150), preferably within a brief time interval, the free-wheeling of the electric motor (150), the switch-off of the power switching devices, and the like.

17. Operating apparatus (100) according to at least one of the preceding claims, **characterized in that** the actuating device (120) switches off the driver circuit (1217) with a time delay during execution of the safety state transfer function, it preferably being possible to adjust the delay.

18. Operating apparatus (100) according to at least one of the preceding claims, **characterized in that** the braking of the electric motor (150) is effected by the power switching devices shorting the coil circuit of the stator unit.

19. Operating apparatus (100) according to at least one of the preceding claims, **characterized in that** the free-wheeling of the electric motor (150) is effected by the power switching devices opening the coil circuits of the stator unit.

20. Operating apparatus (100) according to at least one of the preceding claims, **characterized in that** the actuating device (120) changes over to an actuating device inoperative state after the safety state transfer function is effected by the superordinate control device (300).

21. Operating apparatus (100) according to at least one of the preceding claims, **characterized in that** the rotor unit is fixedly connected to a mechanical force transmission device.

22. Use of an operating apparatus (100) according to Claims 1 to 21 for operating a component which is selected from a group of components which comprises the manual transmission, camshaft adjustment systems, electronic clutch management systems and the like.

## Revendications

1. Dispositif de commande (100) pour la commande de composants d'un véhicule avec au moins un moteur électrique (150), qui comporte au moins une unité de stator et une unité de rotor, au moins un équipement de commande (120) pour le moteur électrique (150) comportant au moins un équipement de logique (121) et au moins un équipement de puissance (122), dans lequel l'équipement de commande (120) est relié de manière fixe à l'unité de stator, et dans lequel le dispositif de commande (100) peut être transféré d'un premier état à au moins un deuxième état par l'intermédiaire d'au moins une entrée unique de commande d'état (520) et dans lequel le dispositif de commande (100) est piloté et/ou contrôlé par un équipement de pilotage (300) maître, **caractérisé en ce que** le premier état du dispositif de commande (100) est un état actionné et le deuxième état du dispositif de commande (100) est un état de protection et **en ce que** l'équipement de pilotage (300) maître actionne au moins une fonction de transition vers l'état de protection lors de la transition du dispositif de commande (100) vers l'état de protection.

2. Dispositif de commande (100) selon la revendication 1, **caractérisé en ce qu'**au moins un équipement de décision est prévu, relié au moins à l'entrée de commande d'état (520) et qui actionne le transfert du dispositif de commande (100) du premier état au deuxième état en fonction d'au moins une propriété de la grandeur physique qui est injectée dans l'entrée de commande d'état c'est-à-dire abstraction faite du signal qui y est présent (signal de commande d'état).

3. Dispositif de commande (100) selon au moins une des revendications précédentes, **caractérisé en ce que** la propriété du signal de commande d'état, dont le changement est enregistré par l'équipement de décision et qui actionne le transfert du dispositif de commande (100) du premier état au deuxième état, est prélevée dans un groupe de propriétés du signal qui comporte le niveau du signal, la fréquence du signal, des échantillons périodiques du signal, des échantillons singuliers du signal, le spectre de fréquences du signal, le temps de montée et de descente du signal, le rapport cyclique du signal et similaires.

4. Dispositif de commande (100) selon au moins une des revendications précédentes, **caractérisé en ce que** l'équipement de décision prévoit au moins un critère de décision prédéfini, de préférence plusieurs critères de décision prédéfinis, qui, dans des cas prédéfinis de passage au-dessus ou au-dessous de valeurs de seuils prédéfinies de la propriété du signal de commande d'état, fixe des deuxièmes états prédéfinis qui se distinguent par différents paramètres de fonctionnement du dispositif de commande et dans lesquels le dispositif de commande est transféré lorsque survient un de ces cas.

5. Dispositif de commande (100) selon au moins une des revendications précédentes, **caractérisé en ce que** l'équipement de décision comporte au moins une porte logique (1215), de préférence une combinaison de portes logiques.

6. Dispositif de commande (100) selon au moins une des revendications précédentes, **caractérisé en ce que** le moteur électrique (150) est commutable électroniquement.

7. Dispositif de commande (100) selon au moins une des revendications précédentes, **caractérisé en ce que** l'unité de stator comporte au moins trois capteurs de mesure de position, de préférence des capteurs à effet Hall, pour la détermination de signaux de mesure de position, qui caractérisent la position relative entre l'unité de stator et l'unité de rotor.

8. Dispositif de commande (100) selon au moins une des revendications précédentes, **caractérisé en ce que** l'équipement de commande (120) comporte de plus au moins un équipement de filtrage (123) pour l'absorption de rayonnement perturbateur.

9. Dispositif de commande (100) selon au moins une des revendications précédentes, **caractérisé en ce que** l'équipement de logique (121) comporte au moins un équipement d'enregistrement du signal, un équipement de mémoire, un équipement de calcul (1216) et un équipement d'interface (1217).

10. Dispositif de commande (100) selon au moins une des revendications précédentes, **caractérisé en ce que** l'équipement de puissance (122) comporte au moins un équipement onduleur avec des équipements de commutation de puissance, dans lequel des transistors de puissance à effet de champ sont prévus comme équipements de commutation de puissance.

11. Dispositif de commande (100) selon au moins une des revendications précédentes, **caractérisé en ce que** le premier état du dispositif de commande (100) est un état actionné et le deuxième état du dispositif de commande (100) est un état de repos.

12. Dispositif de commande (100) selon au moins une des revendications précédentes, **caractérisé en ce que** l'équipement de commande (120) actionne au moins une fonction de transition vers l'état de repos lors de la transition vers l'état de repos.

13. Dispositif de commande (100) selon au moins une des revendications précédentes, **caractérisé en ce que** la fonction de transition vers l'état de repos est prélevée dans un groupe qui comporte le heurt par le moteur électrique (150) d'une position de fin de course prédéfinie, la mémorisation d'au moins un paramètre prédéfini en fonction des signaux de mesure de position ou des signaux de mesure de position eux-mêmes dans l'équipement de mémoire ou similaire.

14. Dispositif de commande (100) selon au moins une des revendications précédentes, **caractérisé en ce que** l'équipement de commande (120) retourne de lui-même dans un état de repos de l'équipement de commande après avoir actionné la fonction de transition vers l'état de repos.

15. Dispositif de commande (100) selon au moins une des revendications précédentes, **caractérisé en ce que** l'équipement de pilotage (300) maître pilote également au moins le dispositif de commande (100) par l'intermédiaire de l'entrée unique de commande d'état (520).

16. Dispositif de commande (100) selon au moins une des revendications précédentes, **caractérisé en ce que** la fonction de transition vers l'état de protection est prélevée dans un groupe qui comporte le freinage du moteur électrique (150), de préférence dans un délai court, la roue libre du moteur électrique (150), la coupure de l'équipement de commutation de puissance et similaires.

17. Dispositif de commande (100) selon au moins une des revendications précédentes, **caractérisé en ce que** pendant l'exécution de la fonction de transition vers l'état de protection, l'équipement de commande (120) coupe l'équipement d'interface (1217) après un délai, ce délai étant de préférence réglable.

18. Dispositif de commande (100) selon au moins une des revendications précédentes, **caractérisé en ce que** le freinage du moteur électrique (150) est actionné par le fait que les équipements de commutation de puissance court-circuitent les circuits électriques des bobinages de l'unité de stator.

19. Dispositif de commande (100) selon au moins une des revendications précédentes, **caractérisé en ce que** la roue libre du moteur électrique (150) est actionné par le fait que les équipements de commutation de puissance ouvrent les circuits électriques des bobinages de l'unité de stator.

20. Dispositif de commande (100) selon au moins une des revendications précédentes, **caractérisé en ce que** l'équipement de commande (120) retourne de lui-même dans un état de repos de l'équipement de commande après que l'équipement de pilotage (300) maître ait actionné la fonction de transition vers l'état de protection.

21. Dispositif de commande (100) selon au moins une des revendications précédentes, **caractérisé en ce que** l'unité de rotor est solidement reliée à un équipement mécanique de transmission de la force.

22. Utilisation d'un dispositif de commande (100) selon les revendications 1 - 21 pour actionner un composant choisi dans un groupe de composants comportant des boîtes de vitesses, des systèmes de réglage de l'arbre à cames, des systèmes de gestion électroniques de l'embrayage et similaires.
